# EUROPEAN PATENT APPLICATION

(11) **EP 4 014 925 A1**
(43) Date of publication of application: **22.06.2022**
(21) Application number: 21155899.4
(22) Date of filing: 09.02.2021
(51) Int. Cl.: A61C 17/22, A46B 15/00, A61C 17/34

(54) **ADAPTIVE TOOTHBRUSH**

(30) Priority: 21.12.2020 US 202063128579 P
(71) Applicant: Koninklijke Philips N.V., 5656 AG Eindhoven (NL)
(72) Inventor: TIDBALL, Brian Esley, 5656 AE Eindhoven (NL); VILLAR DURAN, Jose Martin, 5656 AE Eindhoven (NL); FARRELL, Nathan, 5656 AE Eindhoven (NL); PHIBBS, Robert Joseph Leigh, 5656 AE Eindhoven (NL); DIKMEN, Gul, 5656 AE Eindhoven (NL); BIRCAN, Berkay, 5656 AE Eindhoven (NL); LABADIE LEZAMA, Ivonne, 5656 AE Eindhoven (NL); PEREIRA, Chelsea, 5656 AE Eindhoven (NL); STARKE, Elizabeth Michelle, 5656 AE Eindhoven (NL)
(74) Representative: Philips Intellectual Property & Standards

(57) **Abstract**

Claimed is a personal care system comprising: a pressure sensor; a motor for driving an implement, the motor capable of operating in different modes; a processor configured to change the mode of operation of the motor from a first to a second mode when pressure measured by the pressure sensor exceeds a first pre-determined pressure level for a pre-determined duration. Further, a method for operating a personal care device is claimed.

## Description

### FIELD OF THE INVENTION

The present invention relates to oral health care devices such as toothbrushes. In particular the invention relates to techniques for changing the brushing behavior of users of these devices.

### BACKGROUND OF THE INVENTION

Users of power toothbrushes occasionally apply excess pressure on their teeth while brushing. Some users regularly and consistently apply excess pressure for extended periods of their brushing sessions. This can be damaging for the teeth material or may impact gum health.

Existing power toothbrushes detect pressure and provide feedback to inform the users stop applying excess pressure.

CN107432775 describes a toothbrush where pressure is sensed real-time. The vibration frequency is regulated according to the pressure of the electric toothbrush on the teeth.

There is a need for oral healthcare devices that teach or coach the user to change their brushing behavior.

### SUMMARY OF THE INVENTION

A personal care system comprising: a pressure sensor; a motor for driving an implement, the motor capable of operating in different modes; a processor configured to change the mode of operation of the motor whenever pressure measured by the pressure sensor exceeds a pre-determined pressure level for a pre-determined duration.

A personal care system comprising: a pressure sensor; a motor for driving an implement, the motor capable of operating in different modes; a processor configured to change the mode of operation of the motor from a first to a second mode when pressure measured by the pressure sensor exceeds a pre-determined pressure level for a first pre-determined duration a first time.

According to an embodiment, the processor is configured to further change the mode of operation of the motor from the second to a third mode when pressure measured by the pressure sensor exceeds the pre-determined pressure level for a second pre-determined duration a second time.

According to an embodiment, the processor is configured to change the mode of operation of the motor whenever pressure measured by the pressure sensor exceeds the pre-determined pressure level for a pre-determined duration. Thus, whenever the mode of operation is changed, pressure levels are measured again and the duration of the measured pressure levels exceeding the pre-determined pressure level is also timed again. This means that, in this embodiment, the mode of operation is changed each time pressure levels are above a certain level for a certain period of time. The motor of the personal care system may have a fixed number of mode of operations. The changing of the mode of operation may be performed until a certain mode of operation has been reached, for example the mode of operation related to the lowest frequency and/or amplitude drive signal.

According to an embodiment, each mode of operation of the motor causes the motor to produce a different vibration pattern for driving the implement.

According to an embodiment, changing the mode of operation of the motor comprises changing a frequency and/or amplitude drive signal of the motor.
According to an embodiment, changing the mode of operation of the motor comprises changing a frequency and/or amplitude drive signal of the motor to a lower frequency and/or amplitude drive signal.

According to an embodiment, the personal care system is a toothbrush, wherein the implement is a brushhead and wherein the pressure sensor is adapted for sensing pressure applied by the brushhead on teeth (or gum) of a user during a brushing session.

According to an embodiment, the processor is configured to change the mode of operation of the motor to the first mode when the device is powered off and thereafter restarted.

According to an embodiment, the motor and the pressure sensor are comprised in a toothbrush and wherein the processor is comprised in a separate device; and wherein the toothbrush and the separate device are capable of being wirelessly interconnected.

According to an embodiment, the pressure sensor comprises a sensing mechanism capable of measuring the deflection of the drive shaft coupled to the motor. The extent of deflection of the drive shaft relates to pressure an implement coupled to the drive shaft applies on a surface such as e.g. gum or teeth material in the case of an oral healthcare devices such as a toothbrush.

A method for operating a personal care system, comprising: receiving pressure levels sensed by the personal care device; recording a duration of received pressure levels exceeding a pre-determined pressure level; change the mode of operation of a motor of the personal care device whenever the duration exceeds a pre-determined duration.

A method for operating a personal care system, comprising: receiving pressure levels sensed by the personal care device; recording a duration of received pressure levels exceeding a pre-determined pressure level; change the mode of operation of a motor of the personal care device from a first mode to a second mode when the duration exceeds a first pre-determined duration.

According to an embodiment, further changing the mode of operation of the motor from the second to a third mode when pressure levels measured by the pressure sensor exceeds the pre-determined pressure level for a second pre-determined duration a second time. According to an embodiment, changing the mode of operation may be performed again whenever pressure levels exceed a pre-determined duration for a pre-determined duration. Thus, in a single brushing session, the mode of operation may be changed several times, depending on the availability of modes of operation.

According to an embodiment, changing the mode of operation of the motor changes a vibration pattern of an implement coupled to the motor.

According to an embodiment, changing the mode of operation of the motor comprises changing intensity of the drive signal of the motor. According to an embodiment, changing the mode of operation of the motor comprises changing a frequency and/or amplitude drive signal of the motor.

According to an embodiment, the personal care system is a toothbrush having a brushhead, and wherein pressure levels sensed by the personal care device is pressure applied by the brushhead on teeth of a user during a brushing session.

According to an embodiment, the mode of operation of the motor is reset to the first mode when the device is powered off and thereafter restarted.

According to an embodiment, pressure level data are wirelessly received.

A computer program comprising instructions which, when the program is executed by a computer, cause the computer to carry out the steps of the method and any of its embodiments as described above.

### BRIEF DESCRIPTION OF THE DRAWINGS

**FIG. 1** depicts a block scheme of a personal care system and its components
**FIG. 2** depicts an embodiment of a method for operating a personal care system
**FIG. 3** depicts an embodiment of a method for operating a personal care system
**FIG. 4** depicts an embodiment of a method for operating a personal care system

### DETAILED DESCRIPTION OF THE EMBODIMENTS

The solution described in this disclosure solves the problem of how to protect users from applying too much pressure on their teeth during brushing and help them to change their brushing behaviour through automatic device functionality adaptation.

The solution in this disclosure solves the problem by timing how long the user has been applying too much pressure with the brushead on his/her teeth. By detecting when the user applies too much pressure on the teeth for a pre-defined amount of time, the operation of the device is automatically changed to a different mode of operation. The device may keep on functioning in this different mode of operation. When the over-pressure behaviour of the user persists, the toothbrush may further change the mode of operation. Again, the device may keep on functioning in this further changed mode of operation.

In this disclosure a personal care system is presented which comprises: a motor for driving an implement, the motor capable of operating in different modes; a pressure sensor adapted for sensing how much pressure is applied on a surface with the implement when coupled to the drive shaft; and a processor configured to change the mode of operation of the motor whenever pressure measured by the pressure sensor exceeds a pre-determined pressure level for a pre-determined duration.

The above also applies to other personal care devices where pressure applied to a surface could be harmful to the users. For example, beauty, skincare or hair grooming devices related to skin surface contact.

In a **first** aspect of the invention, a personal care system is disclosed. The personal care system may be an oral care device such as a toothbrush. The personal care device contains a motor that drives an implement that is attached or can be attached to the motor. The motor may be located inside a handle of the personal care device. The personal care device may have a drive shaft which is driven by the motor. Traditionally such a drive shaft is located outside of the handle. For example, the personal care device is a toothbrush whereby the implement is a brushhead which can be coupled and decoupled to/from the drive shaft. Alternatively the brushhead is fixedly attached to the drive shaft.

The personal care device comprises a means for sensing pressure, e.g. force that is applied by the implement on a surface. The means for sensing pressure may be a pressure sensor or another device capable of sensing force being applied on a surface. In the embodiment of a toothbrush, the pressure sensor is arranged such that it may sense how much force a user applies with the brushhead on his/her teeth during a brushing session.

The motor of the personal care device is capable of functioning in different modes. Different modes allow the motor to provide a different oscillation/vibration pattern to the implement attached to it. For example, pattern and/or amplitude and/or frequency of the provided oscillation/vibration may be different for each mode. For example, in a toothbrush the motor drives a brushhead wherein the motor is capable of driving the brushheads in different modes, each mode providing a different vibration to the brushhead. Traditionally these modes can be adjusted manually by the user.

The personal care system comprises a processor that is capable of automatically changing the mode of the motor based on an input. The processor is configured to automatically change the mode of operation of the motor from a first to a second mode when pressure measured by the pressure sensor exceeds a first pre-determined pressure level for a first pre-determined duration a first time. Thus, when the pressure value sensed by the pressure sensor continuously exceeds a first pre-determined pressure threshold value for a first pre-determined amount of time, then the mode of operation is changed without manual intervention of the user. For example, for a toothbrush, when the user continuously applies too much force on the teeth for a period of time, the mode of the motor of the toothbrush is changed to a different mode. The different mode may be a mode providing vibrations at a lower frequency/amplitude thus lowering the chance of hurting or damaging the teeth or gum of the user.

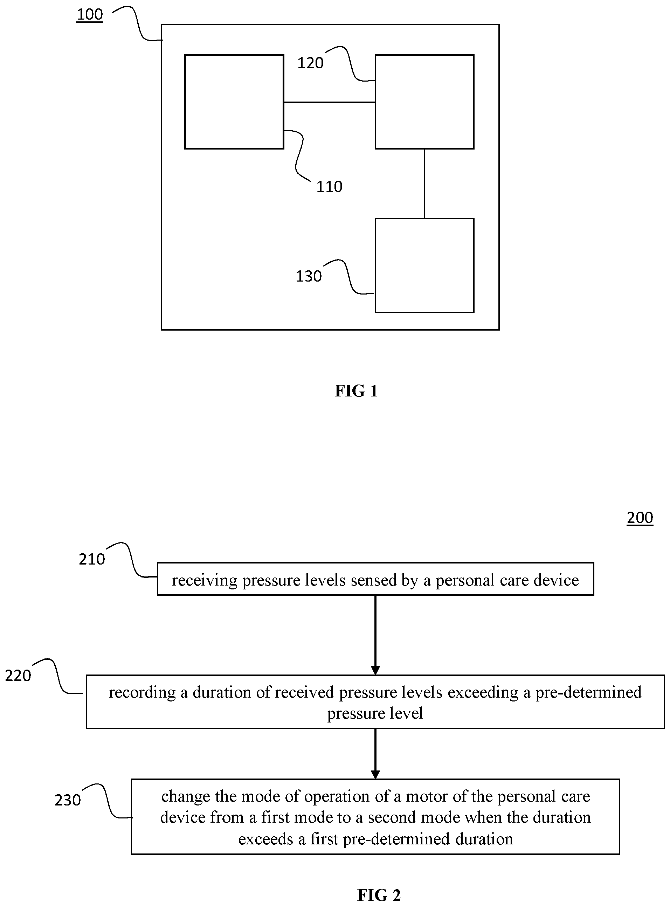

**FIG. 1** depicts a block diagram of the personal care device 100. The pressure sensor 110 provides pressure information to the processor 120. The processor is in communication with the motor 130.

According to an embodiment, the processor is capable of automatically changing the mode of operation of the motor from a second to a third mode when the pressure measured by the pressure sensor exceeds a second pre-determined pressure level for a second pre-determined duration a second time. In this situation, when the pressure sensed by the pressure sensor persists by exceeding the pre-determined pressure level for a second pre-determined duration a second time then the mode of operation of the motor is switched to a third mode of operation which is different than the first and second mode of operation. For example, the third mode of operation may be a mode providing vibrations to an implement at a frequency lower than the first and the second mode.

According to an embodiment, the second pre-determined pressure level is equal to the first predetermined pressure level. In this case, the mode of operation is changed to a different mode of operation when the same pressure use behaviour of the user persists.

According to an embodiment, the second pre-determined pressure level may be different from the first predetermined pressure level, for example higher. In this case, the mode of operation is changed to a different mode of operation when the pressure use behaviour of the user persists and becomes worse, e.g. applying even more pressure.

According to an embodiment, the first pre-determined amount of time is equal to the second pre-determined amount of time. According to an embodiment, first pre-determined amount of time is different from the second pre-determined amount of time.
According to an embodiment, the processor is configured to set the mode of operation of the motor to the first mode when the device is powered off or put in stand-by and thereafter restarted.

According to an embodiment, the motor and the pressure sensor are comprised in a toothbrush and the processor is comprised in a device separate from the toothbrush. The toothbrush and the separate device are capable of wirelessly exchanging data. For example, the separate device is a smartphone whereby the processor receives pressure sensor data from the toothbrush and changes the mode of operation of the motor depending on the received data.

According to an embodiment, the personal care device comprises a timing circuit for recording duration of pressure levels sensed by the pressure sensor. For example, the timing circuit may be configured to record the duration of time that sensed pressure levels are above a pre-defined threshold. The threshold values may be programmable.

In a **second** aspect of the disclosure, and depicted in **FIG. 2****,** a method 200 for operating a personal care system is presented. The personal care system may be a system as described in the first aspect of this disclosure. The method comprises a step 210 of receiving pressure levels sensed by the personal care system. The senses pressure levels represent the amount of pressure that is applied on a surface. In a toothbrush embodiment this may be the pressure applied by a brushhead of a toothbrush on teeth. In another step 220, the duration of the received pressure levels that exceed a first pre-determined pressure level are recorded. In another step 230, the mode of operation of a motor of the personal care device is changed from a first mode to a second mode when the duration exceeds a first pre-determined duration.

Thus, the mode of operation of the motor is changed when the personal care device detects that pressure levels are above a first pre-defined threshold for an amount of time. For example, when pressure levels are above a pre-defined pressure value threshold for 3 seconds, the mode of operation of the motor changes to a mode of operation having a lower frequency. The advantage of this method is that when, for example, a toothbrush detects that a user is applying too much pressure to brush his/her teeth, the toothbrush automatically changes the mode of operation of the motor of the toothbrush to a mode of operation that ensures that the user does not harm his teeth. The change of operation of the motor also functions as a feedback to the user related to his/her brushing behaviour.

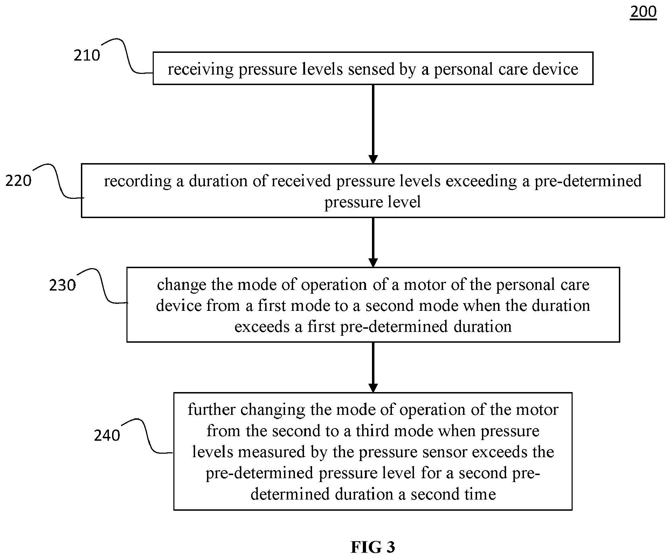

According to an embodiment, and depicted in **FIG. 3****,** the method further comprises changing the mode of operation of the motor from the second to a third mode when the pressure measured by the pressure sensor exceeds a second pre-determined pressure level for a second pre-determined duration, a second time 240. Thus, in this embodiment, the mode of operation of the motor is changed a first time when the personal care device detects that pressure levels are above a first pre-defined threshold pressure value threshold for a first amount of time. Thereafter, the method changes the mode of operation of the motor a second time when the personal care device detects that pressure levels are above a second pre-defined pressure value threshold for a second amount of time. The first and the second pre-defined pressure threshold values may be different or may be the same. The first and the second amount of time may be different or may be the same. The advantage of this method is that the mode of operation of the motor is changed for a second time when, for example, a toothbrush detects that the user keeps on applying too much pressure to the teeth while brushing. The change of operation of the motor functions as a behavioural change feedback to the user. This is depicted in FIG. 200.

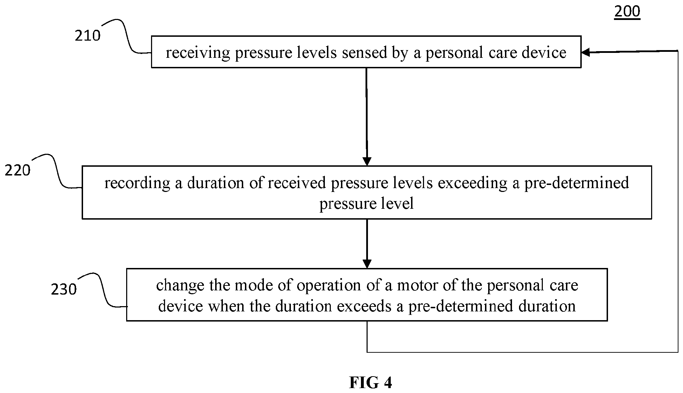

**FIG. 4** depicts a method 200 for changing the mode of operation of a personal care device where the mode of operation is changed whenever received pressure levels 210 exceed a pre-determined pressure level for a pre-determined duration of time 220. In this method, the mode of operation is changed 230 each time the measured pressure level exceeds a pre-determined pressure level threshold for a pre-determined amount of time. For example, a user may brush his/her teeth during a brushing session. Throughout this session, the mode of operation may change multiple times, e.g. each time the user applies too much pressure on the teeth (or gum).

According to an embodiment, changing the mode of operation of the motor comprises changing a vibration pattern of an implement coupled to the motor.

According to an embodiment, changing the mode of operation of the motor comprises changing a frequency and/or amplitude drive signal of the motor.
The personal care system may be a toothbrush having a brushhead, wherein pressure levels sensed by the personal care device relate to pressure applied by the brushhead on teeth of a user during a brushing session.

According to an embodiment, the mode of operation of the motor is reset to the first mode of operation when the device is powered off and thereafter restarted.

According to an embodiment, pressure level data is wirelessly transmitted and received. For example, the sensed pressure levels are received by a device external to the personal care device, e.g. a smart phone or a base station. Processing data may be done by this external device whereby the external device also controls the mode of operation of the motor of the personal care device.

In a **third** aspect of this disclosure, a computer program comprising instructions is described, when the program is executed by a computer, cause the computer to carry out the steps of the method described in the second aspect of the invention.

According to an embodiment, the computer may be a device external to the personal care device. The computer may be internalized in the toothbrush, e.g. a processor inside the toothbrush. The computer may be a smartphone or another portable computing device such as a base station.

## Claims

1. A personal care system (100) comprising:
a pressure sensor (110);
a motor (130) for driving an implement, the motor (130) capable of operating in different modes;
a processor (120) configured to change the mode of operation of the motor (130) from a first to a second mode when pressure measured by the pressure sensor (110) exceeds a pre-determined pressure level for a first pre-determined duration a first time.

2. The personal care system (100) according to claim 1, wherein the processor (120) is configured to further change the mode of operation of the motor (130) from the second to a third mode when pressure measured by the pressure sensor (110) exceeds the pre-determined pressure level for a second pre-determined duration a second time.

3. The personal care system (100) according to any of the preceding claims, wherein each mode of operation of the motor (130) causes the motor (130) to produce a different vibration pattern for driving the implement.

4. The personal care system (100) according to any of the preceding claims, wherein changing the mode of operation of the motor (130) comprises changing intensity of the drive signal of the motor (130).

5. The personal care system (100) according any of the preceding claims, wherein the personal care system (100) is a toothbrush, wherein the implement is a brushhead and wherein the pressure sensor (110) is adapted for sensing pressure applied by the brushhead on teeth or gum of a user during a brushing session.

6. The personal care system (100) according to any of the preceding claim, wherein the processor (120) is configured to change the mode of operation of the motor (130) to the first mode when the device is powered off and thereafter restarted.

7. The personal care system (100) according to any of the preceding claims, wherein the motor (130) and the pressure sensor (110) are comprised in a toothbrush and wherein the processor (120) is comprised in a separate device; and wherein the toothbrush and the separate device are capable of being wirelessly interconnected.

8. A method (200) for operating a personal care system, comprising:
receiving pressure levels sensed by the personal care device (210);
recording a duration of received pressure levels exceeding a pre-determined pressure level (220);
change the mode of operation of a motor of the personal care device from a first mode to a second mode when the duration exceeds a first pre-determined duration (230).

9. The method (200) according to claim 8, comprising further changing the mode of operation of the motor from the second to a third mode when pressure levels measured by the pressure sensor exceeds the pre-determined pressure level for a second pre-determined duration a second time (240).

10. The method (200) according to any of claims 8 to 9, wherein changing the mode of operation of the motor changes a vibration pattern of an implement coupled to the motor.

11. The method (200) according to any of claims 8 to 10, wherein changing the mode of operation of the motor comprises changing intensity of the drive signal of the motor.

12. The method (200) according to any of claims 8 to 11, wherein the personal care system is a toothbrush having a brushhead, and wherein pressure levels sensed by the personal care device is pressure applied by the brushhead on teeth of a user during a brushing session.

13. The method (200) according to any of claims 8 to 12, wherein the mode of operation of the motor is reset to the first mode when the device is powered off and thereafter restarted.

14. The method (200) according to any of claims 8 to 13, wherein pressure level data is wirelessly received.

15. A computer program comprising instructions which, when the program is executed by a computer, cause the computer to carry out the steps of the method of claims 8 to 14.
